# EUROPEAN PATENT SPECIFICATION

(11) **EP 2 169 444 B1**
(45) Date of publication and mention of the grant of the patent: **29.08.2012**
(21) Application number: 09252212.7
(22) Date of filing: 17.09.2009
(51) Int. Cl.: G02B 27/01, G02C 9/00

(54) **Head mounted display device**
Auf dem Kopf montierte Anzeigevorrichtung
Dispositif d'affichage monté sur la tête

(30) Priority: 25.09.2008 JP 2008246988
(43) Date of publication of application: 31.03.2010
(73) Proprietor: Brother Kogyo Kabushiki Kaisha, Nagoya-shi, Aichi 467-8561 (JP)
(72) Inventor: Matsumoto, Shigeru, Nagoya-shi Aichi 476-8562 (JP)
(74) Representative: Smith, Samuel Leonard

(56) References cited:
- EP-A- 0 899 599
- FR-A- 2 894 682
- JP-A- 2000 249 972

## Description

### BACKGROUND OF THE DISCLOSURE

### 1. Field of the Disclosure

The present invention relates to a head mounted display device, in particular, to a head mounted display device with a detachable image display unit.

### 2. Description of the Related Art

Various head mounted display devices (hereafter HMD) have been commercialized as portable displays for TV games and personal digital assistances. For example, in Japanese published unexamined application 2007-148131 (hereafter JP 2007-148131), an eyeglass type HMD is disclosed as an example of HMD. In the eyeglass type HMD, an image display unit is disposed in front of a frame of the eyeglass type HMD such that the image display unit is adjustable in a right-and-left direction. Particularly, an adopter member, in which a permanent magnet is embedded, is detachably disposed in the upper edges of both a left rim and a right rim that support lens of the eyeglass type HMD. A rail is fixed to the adopter member by the permanent magnet, and a retaining shaft is movably disposed in the rail. The image display unit is fixed to the frame via a holding ring. The holding ring surrounds the image display unit and is fixed to the retaining shaft by a screw nut.

In US No. 6,204,974, another eyeglass type HMD is disclosed. In the eyeglass type HMD, a housing assembly for housing an image display unit is retained in a temple of a frame of the eyeglass type HMD by a clamp assembly that includes a mounting fixture and a clamp. More precisely, a pair of pins extend from the mounting fixture that is retained in the housing assembly. The pair of pins penetrate the temple from the outside of the temple, and the housing assembly is retained in the temple.

EP 0 899 599 A describes a display head-set device that includes a support member and a display-optics interface pod coupled to one of a left handle portion and a right handle portion of the support member. The display-optics interface pod houses an image display for viewing by a user. In one embodiment, the display head-set resembles a pair of eye glasses with the interface pod attached to one of the left handle portion and the right handle portion of the support member by an arm clip and extending into the field of vision to offer a monocular viewing sight to the user.

### SUMMARY OF THE DISCLOSURE

In the eyeglass type HMD disclosed in JP 2007-148131, the image display unit is retained in the frame by retaining means such as the retaining shaft that extends downward from the upper edges of the left rim and the right rim. The retaining means such as the retaining shaft would interrupt a user's front view when the user's view moves from images, displayed on the image display unit, to a large display or document in front of the user.

In the eyeglass type HMD disclosed in US 6,204,974, the housing assembly is retained in the temple. When the frame is mounted on the user, the temple would deform according to the shape of the user's head. The deformation of the temple may shift the position of images displayed on the image display unit.

Thus, a need has arisen for a HMD that allows (1) clearing the user's front view and (2) suppressing the effect of deformation of the temple on a position of the image display unit relative to the user's view.

According to an embodiment of the present invention, there is provided a head mounted display device as defined in appended claim 1.

Other objects, features, and advantages of embodiments of the present invention will be apparent to those skilled in the art from the following detailed description and accompanying drawings.

### BRIEF DESCRIPTION OF THE DRAWINGS

Embodiments of a HMD are described with reference to the accompanying drawings, which are given by way of example only, and are not intended to limit the present invention.

Fig. 1 is a schematic perspective view of a frame 10 mounted on a user according to the first embodiment.

Fig. 2 is a perspective view of entire structure of a HMD 1 according to the first embodiment.

Fig. 3 is a perspective view that describes a state in which an image display unit 100 is detached from the frame 10.

Fig.4 is a plan view of the frame 10 without the image display unit 100.

Fig. 5 is a front view of the frame 10 shown in Fig. 4.

Fig. 6 is a left side view of the frame 10 shown in Fig. 4.

Fig. 7A is a cross-sectional view of a front-part 20 at the line A-A in Fig. 4. Fig. 7B is a cross-sectional view of a connection part 30B at the line B-B in Fig. 4. Fig. 7C is a cross-sectional view of a temple body 42A at the line C-C in Fig. 6.

Fig. 8 is an enlarged perspective view of the image display unit 100.

Fig. 9 is an enlarged plan view of the connection part 30A without a temple part 40A, with the connection part 30A partially severed.

Fig. 10 is an enclosed left side view of the connection part 30A and an extending part 51A without the temple part 40A.

Fig. 11 is an enlarged plan view that describes relative position between the connection part 30A and a pressing part 52A.

Fig. 12 is an enlarged left side view that describes relative position between the connection part 30A and the pressing part 52A.

Figs. 13A and 13B are enlarged perspective rear and front views of a left mounting member 53, respectively.

Fig. 14 is a left side view of the temple part 40A with the image display unit 100.

Fig. 15 is an enlarged right perspective view of the temple body 42A and a retaining member 70.

Figs. 16A and 16B are enlarged plan and front views of the retaining member 70, respectively.

Fig. 17 is an enlarged plan view of the retaining member 70 engaged with the temple body 42A.

Fig. 18 is the same as Fig. 14, but the temple part 40A is partially shown in a cross-sectional manner to expose a cable retaining groove 44A.

Fig. 19 is to explain a state that the image display unit 100 is about to be mounted, after the pressing part 52A is separated from the extending part 51A as a result of a counterclockwise rotation of the temple part 40A.

Fig 20 is to explain a state soon after the image display unit 100 is mounted on the connection part 30A.

Fig. 21 is to explain a state that the temple part 40A rotates clockwise and the pressing part 52A presses the first holding piece of the left mounting member 53.

Fig. 22 is to explain a state that the retaining member 70 is mounted on the temple body 42A and a cable 110 is retained in the cable retaining groove 44A.

Figs. 23A and 23B are enlarged perspective rear and front views of a right mounting member 153, respectively.

Fig. 24 is an enlarged plan view of a connection part 330A and a temple part 340A according to the second embodiment.

Fig. 25 is a plan view to show a pair of holding pieces 358A and 358B and an extending part 351A with the partially severed connection part 330A.

Fig. 26 is a left side view of the connection part 330A, the extending part 351A, and the temple part 340A.

### DESCRIPTION OF THE EMBODIMENTS

### First Embodiment

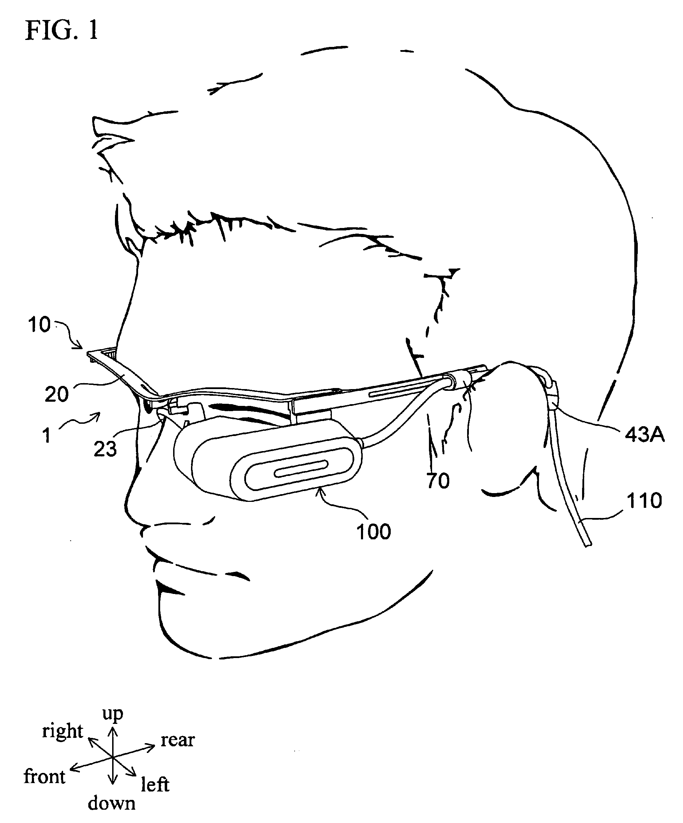

A first embodiment, and its features and advantages, may be understood by referring to Figs. 1-23, like numerals being used for corresponding parts in the various drawings. In the first embodiment, a retinal scanning display (RSD) is used as an image display unit 100. RSD usually includes a light source and a light scanner. The light source, e.g., RGB lasers, emit image light according to image signals. The light scanner, e.g., a galvano mirror, two-dimensionally scans the image light to project image on a user's retina. Since the structure and operation of RSD are well known (see e.g., U.S. Pat. No. 7,234,813), we omit detailed explanation of internal structure of RSD.

### <<External Entire Vew>>

Referring to Figs. 1-2, a HIVED 1 includes an eyeglass type frame 10 (hereafter frame 10), the image display unit 100 mounted on the frame 10. An external apparatus is connected to the image display unit 100 via a cable 110. In this embodiment and the drawings above, an up-and-down direction, a front-and-rear direction, and a right-and-left direction are based on the user in Fig. 1. These directions are also shown in Fig.1 with arrows.

### <Structure of Frame>

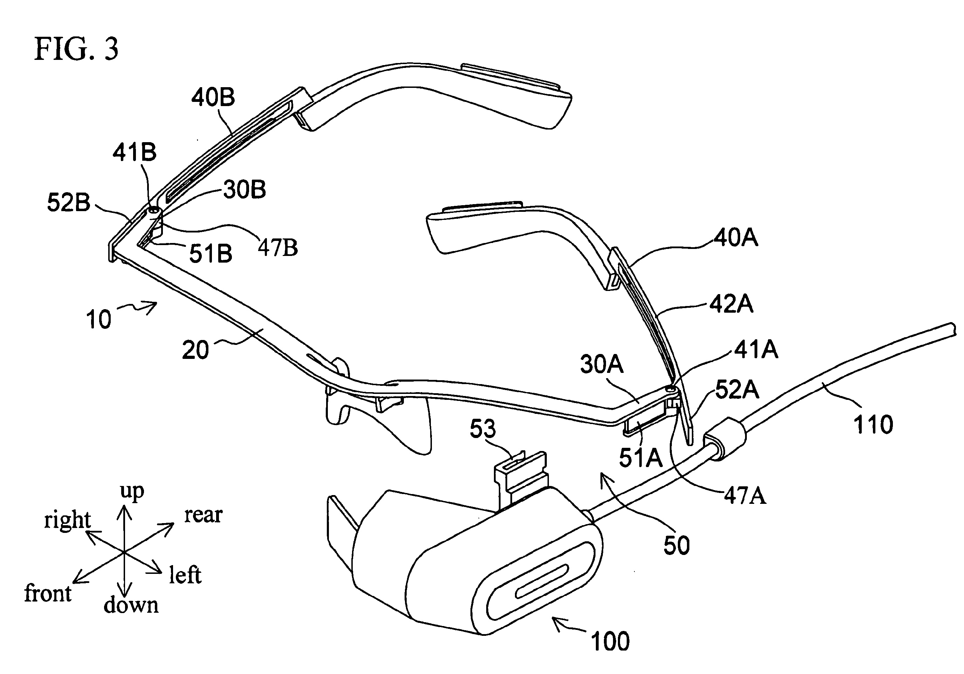

Referring to Figs. 3-6, we explain the structure of the frame 10. In Fig. 3, the frame 10 includes a front part 20, a pair of left and right connection parts 30A and 30B, and a pair of left and right temple parts 40A and 40B.

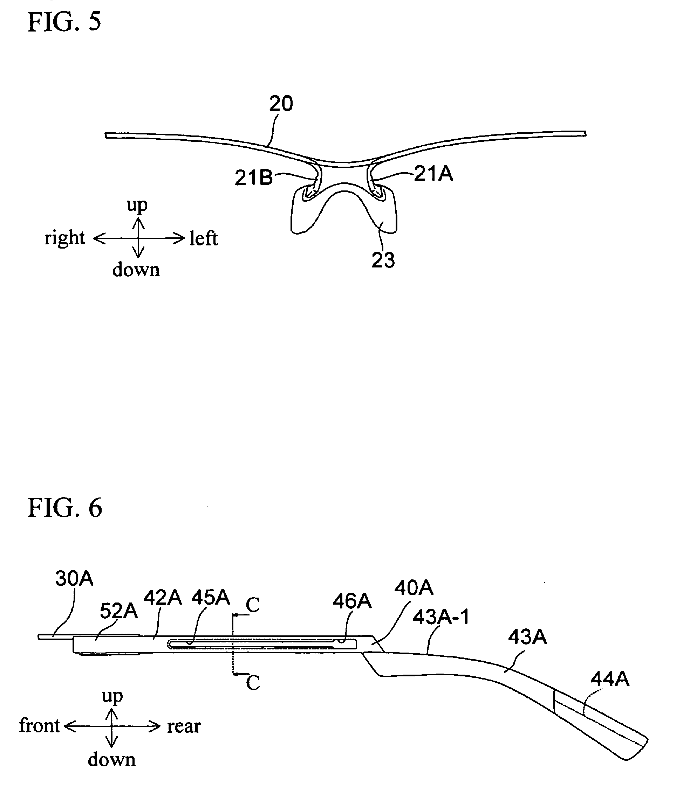

In Fig. 5, the front part 20, mounted on the user in Fig. 1, extends in the right-and-left direction. The front part 20 slopes upward from its central portion to a left side edge and a right side edge. A pair of droop parts 21 A and 21B are formed by cutting the central portion of the front part 20 with a cutting groove 22 and by bending the cut central portion downward. A nose mounting part 23, fixed to the pair of droop parts 21 A and 21B, is mounted on the use's nose when the frame 10 is mounted on the user.

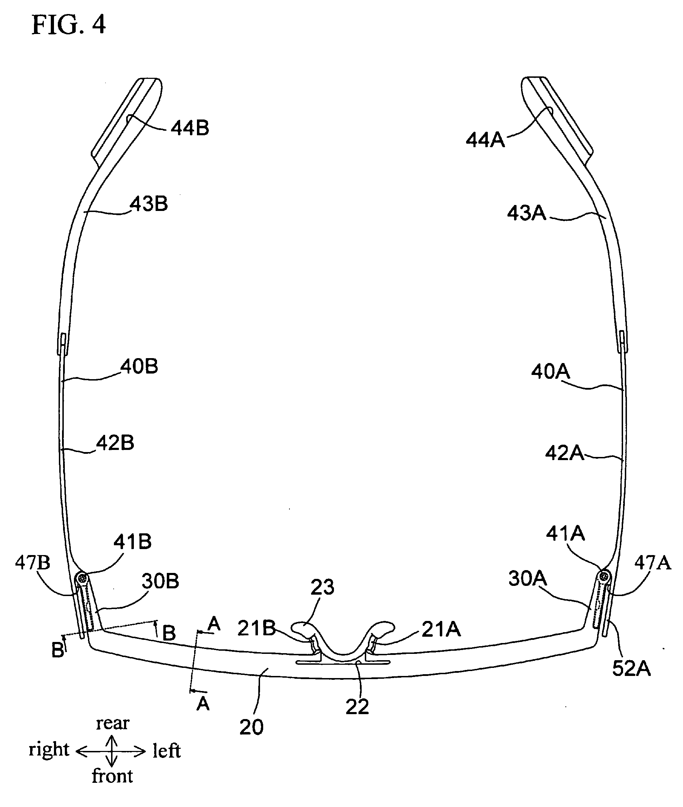

In Fig. 4, the connection parts 30A and 30B are fixed to a left side edge and a right side edge of the front part 20, respectively. The connection parts 30A and 30B extend in a rearward direction at an angle such that they open to the right-and-left direction. The connection parts 30A and 30B are integrally formed with the front part 20. The temple parts 40A and 40B are rotatably connected with the connection parts 30A and 30B with mounting screws 41A and 41B, which extend in the up-and-down direction, respectively. Namely, the temple parts 40A and 40B are rotatable around rotation axes that extend in the up-and-down direction of the mounting screws 41A and 41B, respectively.

The temple parts 40A and 40B include temple bodies 42A and 42B, ear mounting parts 43A and 43B, cable retaining grooves 44A and 44B for retaining the cable 110, and connection portions 47A and 47B, respectively. Since both the temple parts 40A and 40B are symmetric in their structure, we explain the left side temple 40A using Fig. 6.

The temple body 42A is rotatably connected with the with a rear edge portion of the connection part 30A via the connection portion 47A with the mounting screws 41A (see also Fig. 3). The temple body 42A straightly extends in the front-and-rear direction. An elongated hole 45A, which elongates in the front-and-rear direction, is formed on the temple body 42A. An area, in which the elongated hole 45A is formed, is located behind the connection portion 47A. An aperture portion 46A is integrally formed on a rear edge portion of the elongated hole 45A. The aperture portion 46A is wider than the elongated hole 45A in the up-and-down direction.

The ear mounting part 43A, fixed to a rear edge portion of the temple body 42A, extends in the rearward direction with a downward curvature. As shown in Fig.4, the ear mounting parts 43A and 43B are closer each other in the right-and-left direction as they extend rearward. In Fig. 6, the ear mounting part 43A is connected with the temple body 42A in an area lower than the elongated hole 45A. More precisely, an upper surface 43A-1 of the ear mounting part 43A is located under an area on which the elongated hole 45A is formed.

The cable retaining groove 44A is formed on a left side surface of the ear mounting part 43A at a rear edge portion of the ear mounting part 43A (see Fig. 4). The left side surface does not contact with a side of the user's head when the frame 10 is mounted on the user.

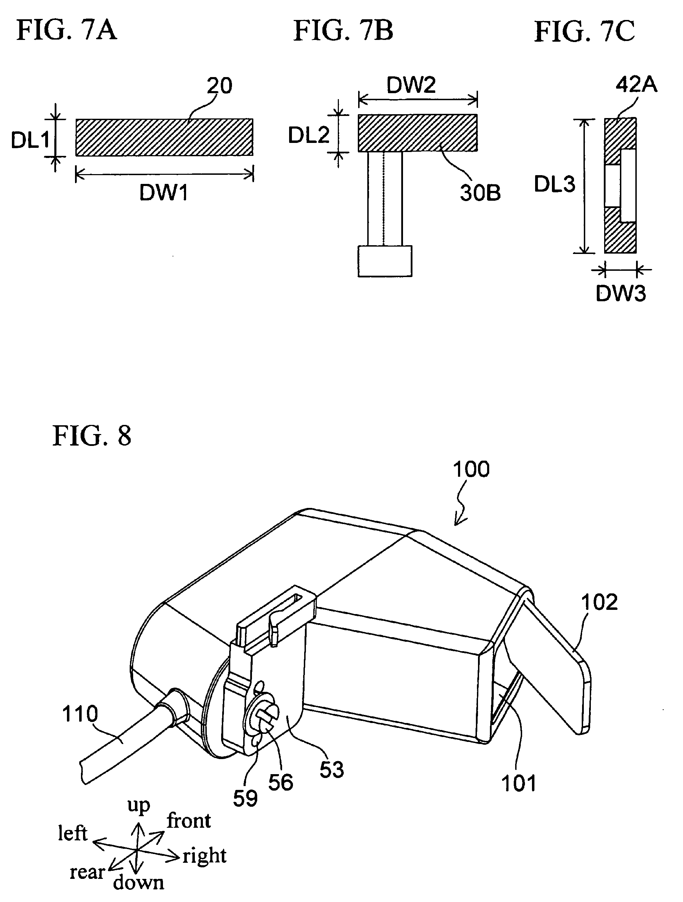

As shown in Fig. 7A, when a cross-sectional shape of the front part 20 is viewed in a direction perpendicular to a longitudinal direction of the front part 20, a length in the up-and-down direction, i.e., a height DL1, is smaller than a length in the front-and-rear direction, i.e., a width DW1. Similarly, as shown in Fig. 7B, with respect to the temple part 30B, when cross-sectional shapes of the temple parts 30A and 30B are viewed in a direction perpendicular to a longitudinal direction of the temple parts 30A and 30B, a length in the up-and-down direction, i.e., a height DL2, is smaller than a length in the right-and-left direction, i.e., a width DW2. Moreover, as shown in Fig. 7C, with respect to temple body 42A, when cross-sectional shapes of the temple bodies 42A and 42B are viewed in a direction perpendicular to a longitudinal direction of the temple bodies 42A and 42B, a length in the up-and-down direction, i.e., a height DL3, is larger than a length in the right-and-left direction, i.e., a width DW3. A bending moment around the rotation axes of the mounting screws 41A and 41B is put on the front part 20 and the connection parts 30A and 30B when the frame 10 is mounted on the user. Since cross-sectional shapes of both the front part 20 and the connection parts 30A and 30B are larger in ratio of width to height than those of the temple bodies 42A and 42B, the deformation of the front part 20 and the connection parts 30A and 30B, caused by the bending moment, is small.

In addition to the difference in the cross-sectional shape described above, constituent materials are also different among the front part 20, the connection parts 30A and 30B, and the temple bodies 42A and 42B. The front part 20 and the connection parts 30A and 30B are made from pure titanium, and the temple bodies 42A and 42B are made from beta titanium. Since the Young's modulus, namely longitudinal elastic modulus, of pure titanium is larger than that of beta titanium, the front part 20 and the connection parts 30A and 30B are more rigid against pulling and compression forces than the temple bodies 42A and 42B. Thus, it is more difficult to deform the front part 20 and the connection parts 30A and 30B relative to other portions of the frame 10.

The nose mounting part 23 and the ear mounting parts 43A and 43B directly contact with the user. Thus, they are made from a synthetic resin with an elasticity designed to prevent the user from experiencing uncomfortable feelings when the frame 10 is mounted on the user.

### <Structure of Retaining Mechanism>

A retaining mechanism 50 retains the image display unit 100 in the connection part 30A or 30B, allowing the user to choose a preferred retaining state of the image display unit 100 either in the connection part 30A or 30B. We explain the structure of the retaining mechanism 50 mainly referring to Figs. 3 and 8. The retaining mechanism 50 includes a pair of left side and right side extending parts 51A and 51B, a pair of left side and right side pressing parts 52A and 52B, and a left mounting member 53. In the first embodiment, the retaining mechanism 50 is configured to retain the image display unit 100 in the connection part 30A.

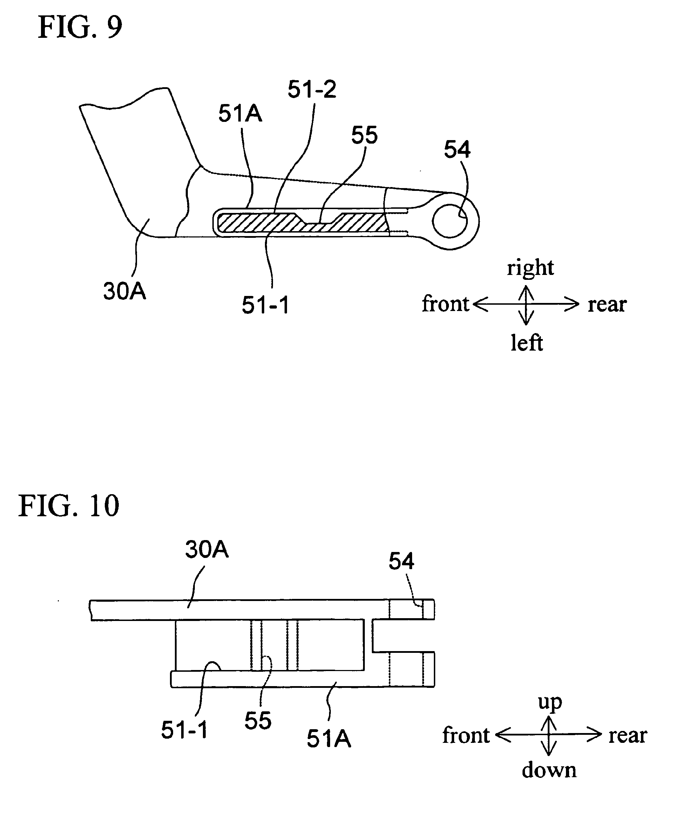

Since both the extending parts 51A and 51B are symmetric in their structure, we explain the extending part 51A. In Fig. 3, the extending part 51A, fixed to a bottom surface of the connection part 30A, extends in the forward direction from a position in which the retaining screw 41A is retained. In Figs. 9 and 10, a first guiding groove 51-1 and a second guiding groove 51-2 are formed on a left side and a right side surfaces of the extending part 51A, respectively. They extend in the forward direction from a retaining hole 54 in which the retaining screw 41A is inserted, opening on a front edge portion of the extending part 51A. An engaging hollow 55 is formed on a central portion of the second guiding groove 51-2.

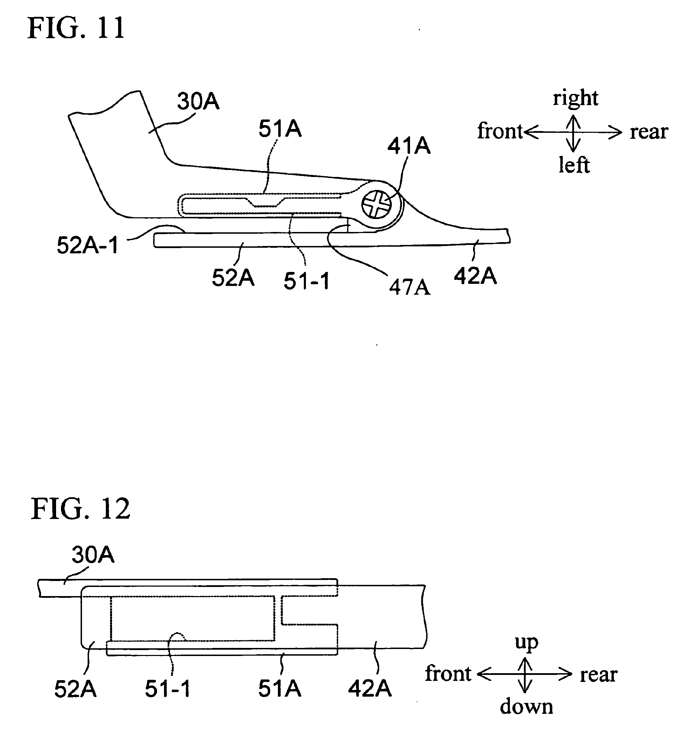

Since both the pressing parts 52A and 52B are symmetric in their structure, we explain the extending part 52A. The pressing part 52A, integrally formed with the temple body 42A, extends in forward direction from the connection portion 47A. In Figs. 11 and 12, the pressing part 52A includes a pressing surface 52A-1. The pressing part 52A faces the extending part 51A for holding a part of the left mounting member 53 between the extending part 51A and the pressing surface 52A-1. The pressing part 52A is longer than the extending part 51A in the forward direction. The size of the pressing part 52A in the up-and-down direction is the same as that of the temple body 42A, and larger than that of the first guiding groove 51-1.

The pressing part 52A is more elastic than the extending part 51A because of the following two reasons. First, the extending part 51A is made from pure titanium as well as the connection part 30A, and the pressing part 52A is made from beta titanium as well as the temple body 42A. Second, when a cross-sectional shape of the pressing part 52A is viewed in a direction perpendicular to a longitudinal direction of pressing part 52A, as well as the temple body 42A, a length in the right-and-left direction, i.e., a width, is smaller than a length in the up-and-down direction, i.e., a height. A bending moment around the rotation axes of the mounting screws 41 A and 41 B is put on the pressing part 52A when the frame 10 is mounted on the user. Because of the underlying constituent material and the cross-sectional shape, the deformation of the pressing part 52A, caused by the bending moment, is larger in magnitude than the deformation of the extending part 51 A.

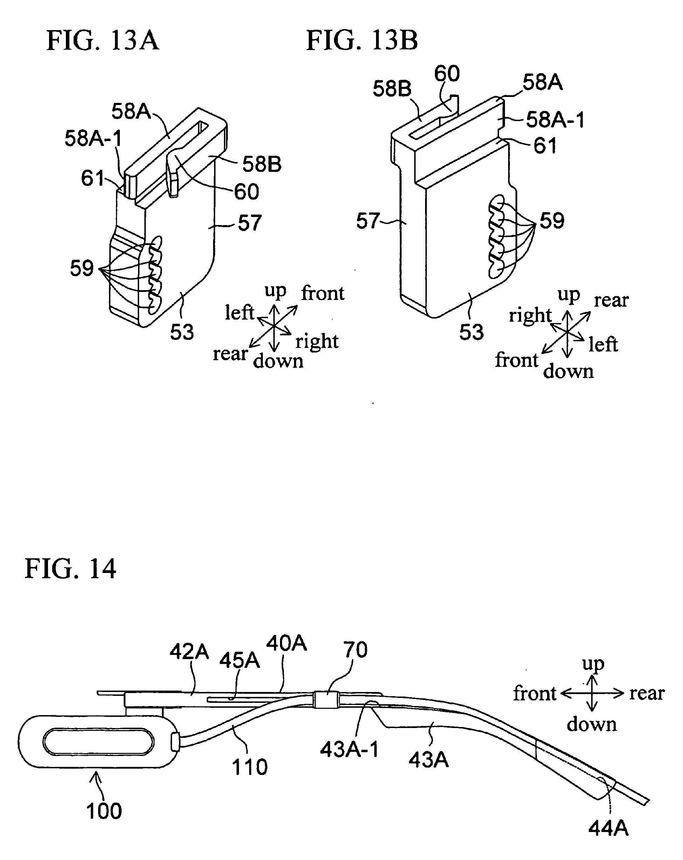

In Fig. 8, the left mounting member 53 is mounted on a right side of a rear portion of the image display unit 100 with a mounting screw 56. In Figs 13A and 13B, the left mounting member 53 includes a mounting body 57, and a pair of holding pieces 58A and 58B. The pair of holding pieces 58A and 58B are disposed in an upper area of the mounting body 57, and are integrally formed with the mounting body 57. They are made from a synthetic resin. A plurality of, e.g., five, fitting holes 59 are formed on a rear portion of the mounting body 57. Each of fitting holes 59 is disposed in different positions in the up-and-down direction. The plurality of fitting holes 59 allow the user to mount the left mounting member 53 on the image display unit 100 at the user's preferred height, by inserting the shaft of a retaining screw 56 into any one of the plurality of fitting holes 59 and by screwing the retaining screw 56 into a threaded screw hole disposed in the image display unit 100.

The pair of holding pieces 58A and 58B hold the extending part 51A by contacting with the both side surfaces of the extending part 51A. The first holding piece 58A is fixed to an upper area of the mounting body 57. The second holding piece 58B is elastically deformable, such that the second holding piece 58B approaches and is separated from the first holding piece 58A. The second holding piece 58B includes an engaging bump 60 protruding from proximal portion of a free end of the second holding piece 58B to the first holding piece 58A. The free end of the second holding piece 58B is curved so as to be apart from the first holding piece 58A. When the image display unit 100 is mounted on the connection part 30A, the first holding piece 58A and the second holding piece 58B fit the opened front edge portion of the extending part 51A and are guided by the first guiding groove 51-1 and the second guiding groove 51-2. Then, the engaging bump 60 engages with the engaging hollow 55.

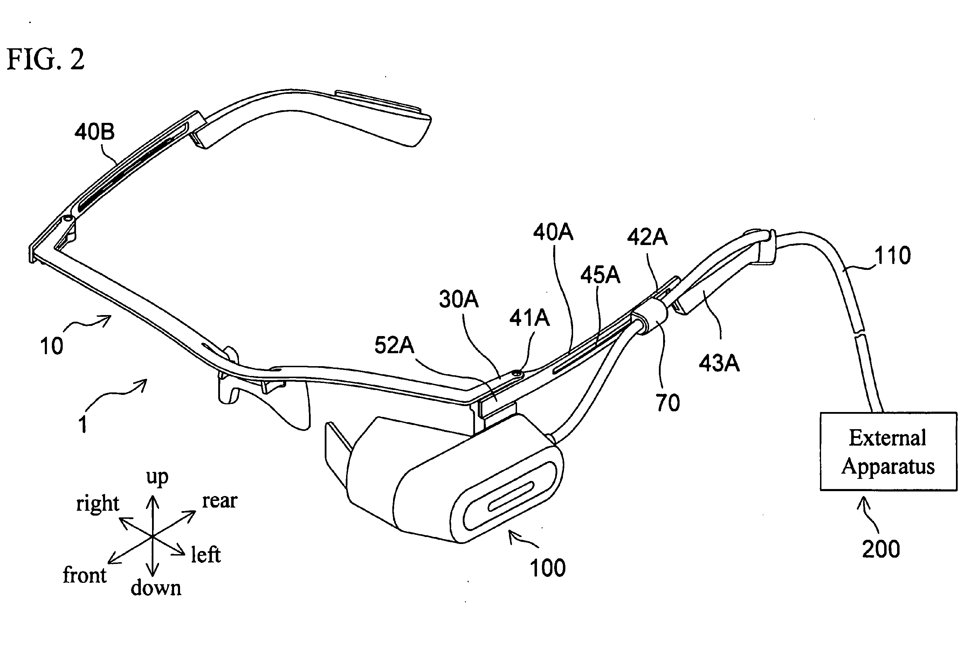

In Fig. 13B, a step part 61 is formed on a connecting portion between the first holding piece 58A and the mounting body 57. In Fig. 2, when the image display unit 100 is mounted on the connection part 30A, the step part 61 forms a space into which the pressing part 52A enters. The space allows the pressing part 52A to press a left side surface 58A-1 that faces the pressing surface 52A-1. In Fig. 11, the size of the pressing surface 52A-1 is longer than that of the left side surface 58A-1 in the front-and-rear direction, and is the same as that of the left side surface 58A-1 in the up-and-down direction. That is, the pressing surface 52A-1 is larger in area than the left side surface 58A-1 that faces the pressing surface 52A-1.

### <Structure to Retain Cable>

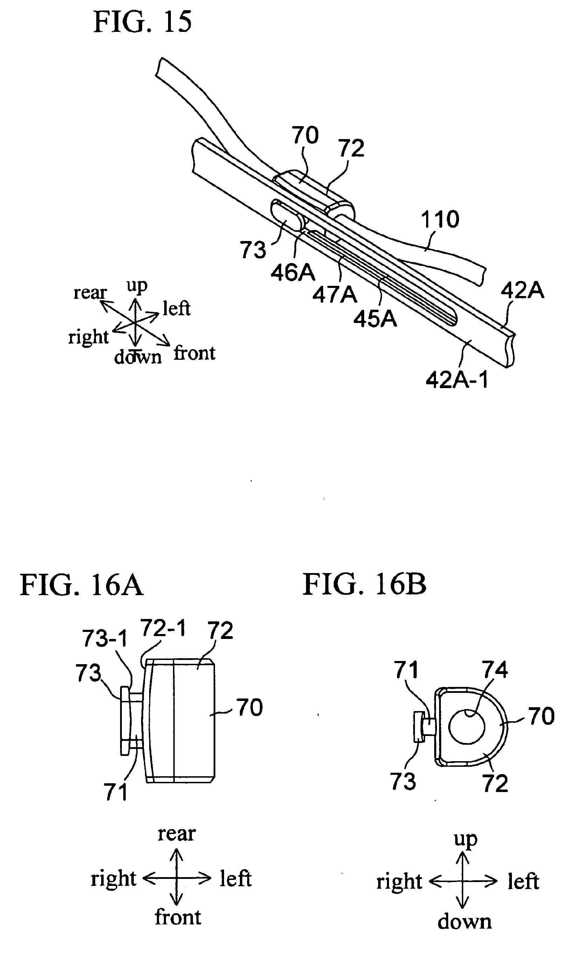

Referring again Fig. 2, the cable 110 is retained along the temple part 40A. Figs. 14-16B describe a structure to retain the cable 110. In Figs. 14 and 15, a retaining member 70 is slidably attached to the elongated hole 45A. In Figs. 16A and 16B, the retaining member 70 includes a sliding portion 71 engegable with the elongated hole 45A, a cable retaining portion 72, and a platelike portion 73. They are integrally made from a synthetic resin.

In Fig. 16B, the cable retaining portion 72, formed with the sliding portion 71 on a left side of the sliding portion 71, includes a through-hole 74 into which the cable 100 is inserted in the front-and-rear direction. As shown in Fig. 15, the size of the platelike portion 73 is larger than that of the elongated hole 45A in the up-and-down direction, and is smaller than that of the aperture portion 46A in the up-and-down direction, such that the platelike portion 73 passes through the aperture portion 46A in the right-and-left direction. A sliding guiding groove 47A, extending forwardly from the aperture portion 46A, is formed along the elongated hole 45A in a right side surface 42A-1 of the temple body 42A. The size of the sliding guiding groove 47A is the same as that of the aperture portion 46A in the up-and-down direction. The platelike portion 73 is slidable along the sliding guiding groove 47A by engaging with the sliding guiding groove 47A after passing through the aperture portion 46A.

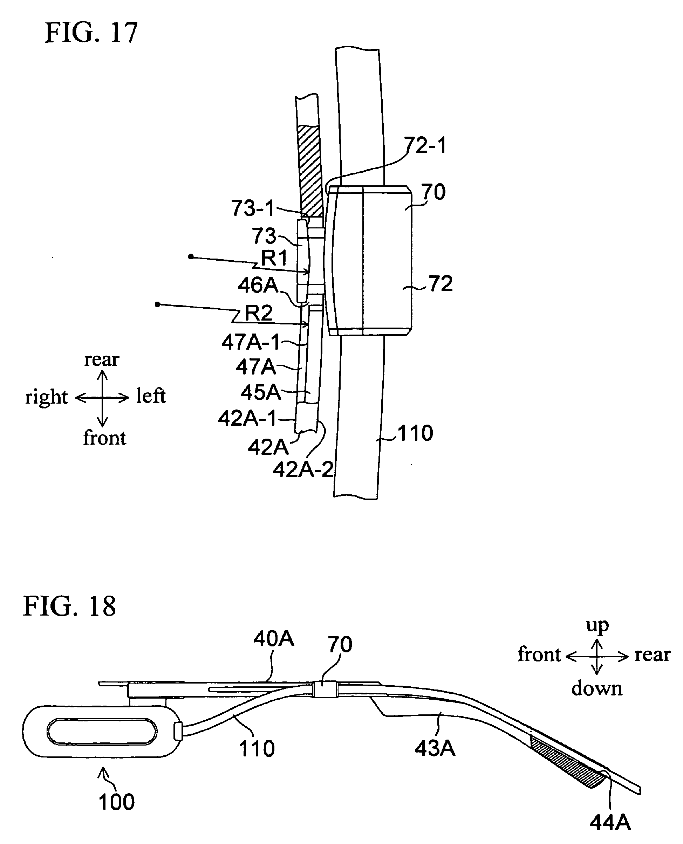

In Figs 16A and 17, the cable retaining portion 72 and the platelike portion 73 include a sliding surface 72-1 and a sliding surface 73-1, respectively. The sliding surface 72-1 can contact with a left side surface 42A-2 of the temple body 42A and the sliding surface 73-1 can contact with the sliding guiding groove 47A. The sliding surface 72-1 is curved along the front-and-rear direction so as to be a convex shape toward the left side surface 42A-2 of the temple body 42A. Likewise, the sliding surface 73-1 is curved along the front-and-rear direction so as to be a convex shape toward a sliding surface 47A-1 in the sliding guiding groove 47A. As shown in Fig. 4, the left side temple body 42A is slightly curved so as to be a convex shape toward the left direction. The right side temple body 42B is slightly curved so as to be a convex shape toward the right direction. In Fig. 17, the temple body 42A is curved when the frame 10 is in an unmounted state, e.g., a state in which the frame 10 is not mounted on the user.

A curvature radius R1 of the sliding surface 73-1 in the platelike portion 73 is smaller than a curvature radius of the right side surface 42A-1 of the temple body 42A under the natural state. More precisely, the curvature radius R1 is smaller than a curvature radius R2 of the sliding surface 47A-1. When the frame 10 is mounted on the user, the temple body 42A bends so as to enlarge the curvature radius of the temple body 42A. Thus, the curvature radius R1 is smaller than the curvature radius R2 whether the frame 10 is mounted on the user or not. Because of this relationship between the curvature radius R1 and the curvature radius R2, the sliding surface 73-1 contacts with the sliding surface 47A-1 at one point, and the sliding surface 72-1 is also contacts with the left side surface 42A-2 at one point. Thus, this configuration allows the retaining member 70 to slide smoothly regardless the bend of the temple body 42.

In Figs. 2 and 14, the cable 110, extending in the rearward direction from the image display unit 100, is retained in the left side of the temple body 42A with the cable retaining member 70. In Fig. 14, the cable 110 debouches into an area above the upper surface 43A-1 of the ear mounting part 43A from the cable retaining member 70. In Fig. 18, the cable retaining groove 44A is deep enough to house the cable 110 inside the cable retaining groove 44A.

### <Structure of Image Display Unit and External Apparatus>

The image display unit 100 is configured to contain few optical systems, in order to reduce the weight of the image display unit 100. In order to reduce the weight, other optical systems are contained in an external apparatus 200. In the first embodiment, the external apparatus 200 contains a red-green-blue (RGB) image signal supply circuit, RGB laser sources, a laser source driver, and a laser coupling optical system for the RGB laser beams. The cable 110 includes an optical fiber that transmits a coupled RGB laser beam. The image display unit 100 contains internal optical systems such as a collimate lens, a horizontal scan part, a vertical scan part, an eye lens, and other portions of internal optical systems. In Fig. 8, the image display unit 100 has a light emitting aperture 101. A translucent half mirror 102 is attached to a proximal portion of the light emitting aperture 101. An angle between the half mirror 102 and the light emitting aperture 101 is adjustable by tweaking, e.g., slightly moving, the half mirror 102.

The image display unit 100 emits the coupled RGB laser beam from the cable 110 to the half mirror 102 via the internal optical systems. The coupled RGB laser beam is reflected by the half mirror 102 and enters the user's eye.

### <<Operation>>

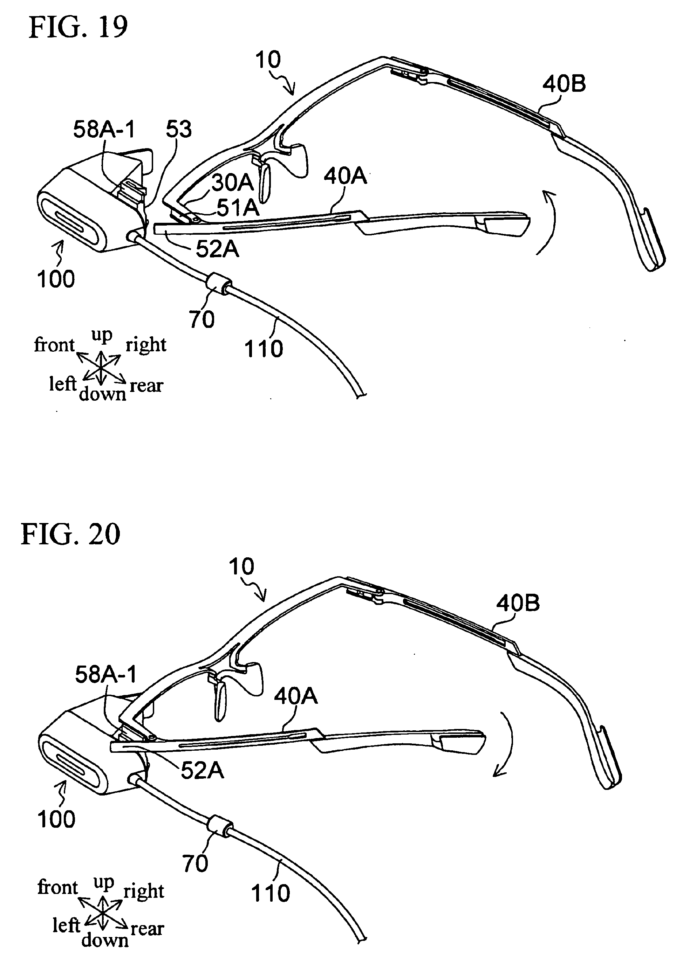

Referring to Figs. 19-22, we explain an operation of this embodiment. Different users may prefer a different side, e.g., a right side or a left side, as a side for mounting the image display unit 100. Thus, the user first chooses one of the connection part 30A and 30B at which to mount the image display unit 100. A shape of a mounting member for mounting the image display unit 100 is different according to whether the image display unit 100 is mounted on the connection part 30A or 30B. In Fig. 13, the left mounting member 53 has a shape for mounting the image display unit 100 on the connection part 30A.

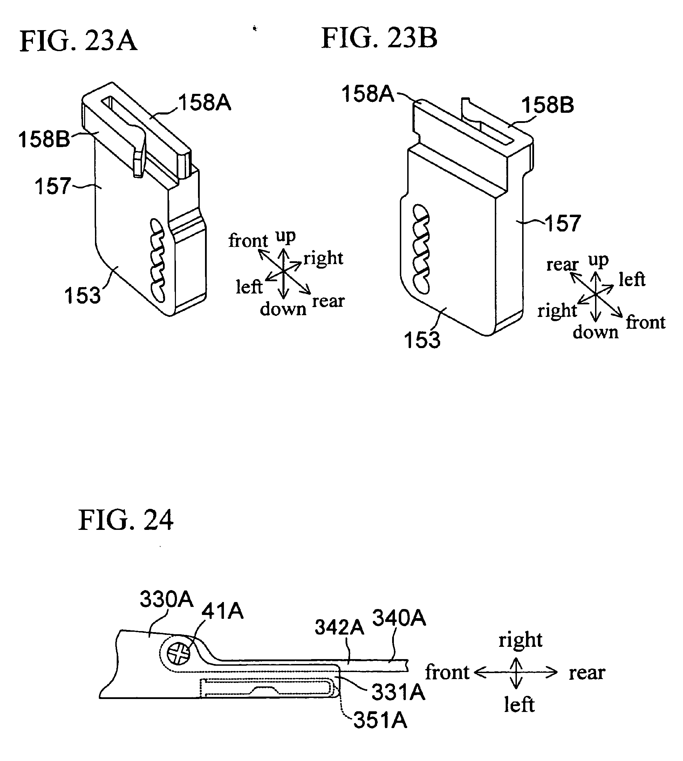

A right mounting member 153, as shown in Figs. 23A and 23B, is used in the case that the image display unit 100 is mounted on the connection part 30B. The right mounting member 153 has a different shape than the left mounting member 53 . A second holding piece 158B is disposed on the left side of a first holding piece 158A. Other components of the right mounting member 153 are the same as those of the left mounting member 53, and their detailed description is omitted.. The image display unit 100 is mounted on the connection part 30B in an upside-down position from the position shown in Fig. 8. Images transmitted via the cable 110 are also displayed in an upside-down position.

In the first embodiment, we explain how the image display unit 100 is mounted on the connection part 30A.

### <Mounting Operation of Mounting Member>

First, the user determines a position of the image display unit 100 relative to the frame 10 in the up-and-down direction. If the user tends to frequently look at a large display or document in front of the user with seldom looking at images from the image display unit 100, the image display unit 100 is mounted on a lower position relative to the possible mounting positions, such that the user's front view is cleared. On the other hand, if the user tends to frequently look at images from the image display unit 100 with rarely moving the user's view, the image display unit 100 is mounted on a position close to the frame 10 because clearing the user's front view is not required. According to the usage of the image display unit 100, the user mounts the left mounting member 53 on the image display unit 100 by inserting the retaining screw 56 into one of the plurality of fitting holes 59 in the left mounting member 53.

### <Retaining Operation of Image Display Unit>

When the frame 10 is not mounted on the user, the user separates the pressing part 52A from the extending part 51A by rotating the temple part 40A counterclockwise as shown in Fig. 19. The user fits the both holding pieces 58A and 58B to the both guiding grooves 51-1 and 51-2 from the opened front edge portion of the extending part 51A. This fitting operation allows the engaging bump 60 in the second holding piece 58B to engage with the engaging hollow 55 in the extending part 51A. By fitting the both holding pieces 58A and 58B in the both guiding grooves 51-1 and 51-2, a position of the image display unit 100, relative to the frame 10, in the up-and-down direction, is determined. The image display unit 100 is retained in the connection part 30A without dropping from the frame 10. Similarly, by engaging the engaging bump 60 with the engaging hollow 55, a position of the image display unit 100, relative to the frame 10, in the front-and-rear direction, is determined. The image display unit 100 is retained in the connection part 30A without forwardly dropping from the guiding grooves 51-1 and 51-2 (see Fig. 20).

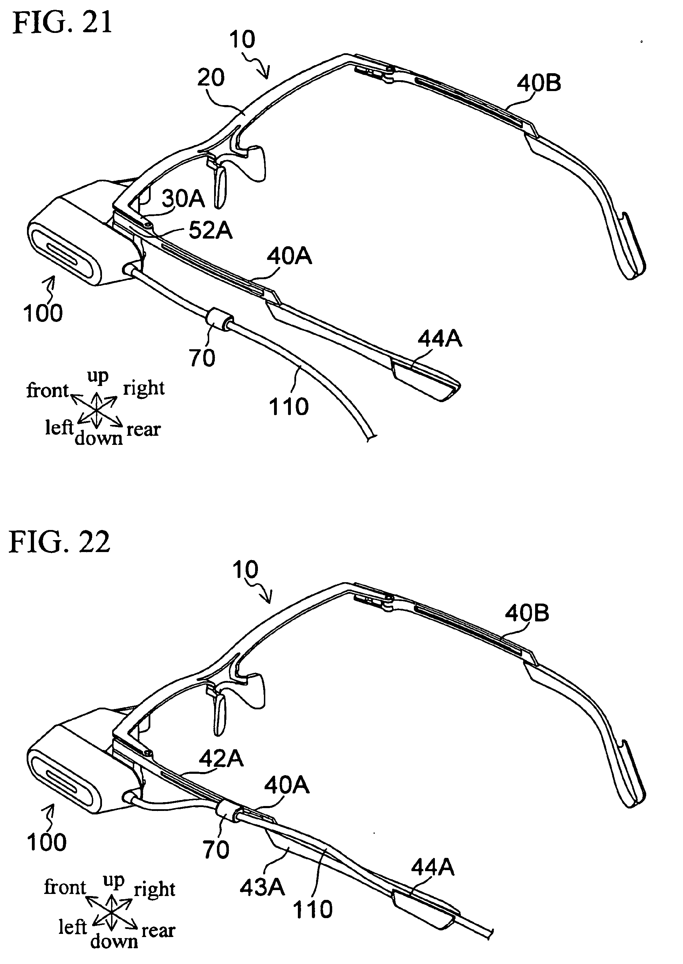

In order to keep the state of retaining of the image display unit 100, the user presses the pressing part 52A into the left side surface 58A-1 in the first holding piece 58A by rotating the temple part 40A clockwise as shown in Fig. 20. In Fig. 21, the first holding piece 58A is sandwiched between the extending part 51A and the pressing part 52A. The image display unit 100 is retained in the connection part 30A by an operation that is not complicated to carry out, e.g., rotating the temple part 40A. A relatively more complicated operation, e.g., screwing a retaining screw is not needed. The connection part 30A, to which the extending part 51A is fixed, is more rigid than the pressing part 52A against a bending moment caused by the rotation of the temple part 40A. Thus, changes in a position at which the image display unit 100 is positioned, relative to the front part 20 and the connection part 30, is suppressed.

Moreover, since the pressing part 52A is elastic, the pressing part 52A puts enough elastic force on the left side surface 58A-1 in the first holding piece 58A to retain the image display unit 100. Furthermore, the pressing part 52A prevents the image display unit 100 from dropping from the extending part 51A in a forward direction, by applying a pressing force to the entire area of both the extending part 51A and the first holding piece 58A. This force is generated because the pressing surface 52A-1 in the pressing part 52A is larger in a pressing area in the up-and-down direction and the right-and-left direction than the first guiding groove 51-1, and is larger in the pressing area than the left side surface 58A-1 in the first holding piece 58A.

### <Retaining Operation of Cable>

In Fig. 21, the cable 110 is inserted in the through-hole 74 in the retaining member 70. In Fig. 21, the user inserts the platelike portion 73 in the aperture portion 46A from the left side of the aperture portion 46A (see Fig. 15 showing the state soon after the platelike portion is inserted in the aperture portion 46A). The retaining member 70 is retained in the temple body 42A by forwardly sliding the retaining member 70 along the elongated hole 45A from the state shown in Fig. 15.

The cable 110 extends in the rearward direction from the retaining member 70, and is engaged with the cable retaining groove 44A by the user, in order to that cable 110 does not impede the mounting of the frame 10 by the user. The cable retaining groove 44A is deep enough to house the cable 110 inside the cable retaining groove 44A, and is brought to slight elastic deformation by inserting the cable 110 in the cable retaining groove 44A. The cable 110 is retained in the cable retaining groove 44A as shown in Fig. 22.

### <Mounting Operation of Frame>

As shown in Fig. 22, the user mounts the frame 10 on the user's head with the cable 110 retained in the cable retaining groove 44A. More precisely, as shown in Fig. 1, the user mounts the nose mounting part 23 on the user's nose, and mounts the ear mounting parts 43A and 43B on the user's ear. The distance between the temple parts 40A and 40B varies according to the size of the user's head. The distance usually becomes larger than the distance under the natural state shown in Fig. 4. This widened distance between the temple parts 40A and 40B causes bending moments around the rotation axes of the retaining screws 41 A and 41B. A clockwise bending moment around the rotation axis of the retaining screw 41A is put on the temple body 42A and the pressing part 52A. The clockwise bending moment elastically deforms the pressing part 52A, and the pressing part 52A presses the first holding piece 58A to the extending part 51A. This elastic deformation of the pressing part 52A, when the frame 10 is mounted on the user, further applies force to retain the image display unit 100 in the connection part 30A by further elastic force for retaining the image display unit 100.

In Fig 1, the widened distance between the temple parts 40A and 40B would cause sag of the cable 110 between the image display unit 100 and the retaining member 70. The user may eliminate the sag by forwardly sliding the retaining member 70 with the frame 10 mounted on the user.

In Fig. 14, the cable 110 extends in the rearward direction. Behind the retaining member 70, the cable 110 is disposed in the area above the upper surface 43A-1. This position of the cable 110 prevents user discomfort by preventing cable 110 from contacting the user's ear. The cable retaining groove 44A is formed on the most rearward portion of the ear mounting part 43A, thereby positioning the cable retaining groove 44A is located behind the user's ear when the frame 10 is mounted on the user as shown in Fig. 1. A portion, in which the cable retaining groove 44A is formed, does not press the user's ear, but instead is reduced to contact the cable 110, sagging downward, with the user's ear and occipital.

The user may change the direction, in which the coupled RGB laser beam emits, in order to view images from the image display unit 100 by adjusting the half mirror 102 with the frame 10 mounted on the user. Moreover, an angular position of the image display unit 100 relative to the left mounting member 53 is adjustable around a rotation axis along the retaining screw 56. The user may adjust the half mirror 102 in the up-and-down direction with the frame 10 mounted on the user.

### <Advantages of the First Embodiment>

In the first embodiment, as we described above, following advantages are present.

The retaining mechanism 50 is configured to retain the image display unit 100 in the connection part 30A. The retaining mechanism 50 prevents the image display unit 100 from interrupting the user's front view. It also disposes the image display unit 100 in an area at which the user may readily see, without a large moving of the direction of eyes.

Since the connection parts 30A and 30B are disposed in proximal portions of the rotation axes of the temple parts 40A and 40B, the deformations of the connection parts 30A and 30B are smaller than those of the temple parts 40A and 40B when bending moments are put on the temple parts 40A and 40B. Thus, the effect of the deformation that moves the image display unit 100, retained in the connection part 30A, relative to the user's eye, is reduced.

The pressing part 52A is disposed in the temple body 42A. When the frame 10 is mounted on the user, the pressing part 52A presses the first holding piece 58A into the extending part 51A. The image display unit 100 is retained in the connection part 30A by a relatively simple operation, namely rotating the temple part 40A. There is no need for a special operation such as screwing a retaining screw.

The pair of the holding pieces 58A and 58B hold the two side surfaces of the extending part 51A, thereby retaining the image display unit 100 in the connection part 30A prior to the frame 10 is mounted on the user. Thus, the user mounts the image display unit 100 on the frame 10. When the user mounts the ear mounting parts 43A and 43B on the user's ears, the pressing part 52A presses the first holding piece 58A into the first guiding groove 51-1 in the guiding part 51A. The pair of the holding pieces 58A and 58B robustly hold the two side surfaces of the extending part 51A.

When the holding pieces 58A and 58B fit the guiding grooves 51-1 and 51-2, the engaging bump 60 engages with the engaging hollow 55. By engaging the engaging bump 60 with the engaging hollow 55, together with fitting the holding pieces 58A and 58B to the guiding grooves 51-1 and 51-2, the image display unit 100 is more rigidly kept retaining in the connection part 30A before the frame 10 is mounted on the user. This allows the user to easily mount the image display unit 100 on the frame 10.

The pair of the holding pieces 58A and 58B fit the opened front edge portion of the extending part 51A, and are guided by the guiding grooves 51-1 and 51-2. The user fits the pair of the holding pieces 58A and 58B to the guiding grooves 51-1 and 51-2, which limit the up-and-down position of holding pieces 58A and 58B, which accurately position holding pieces 58A and 58B opposing the pressing part 52A.

The left mounting member 53 is detachably mounted on the image display unit 100 with the retaining screw 56. The user may detach the left mounting member 53 and attach the right mounting member 153 for changing the position of the image display unit 100 in the right-and-left direction.

The mounting body 57 has the plurality of fitting holes 59 formed therethrough in different positions in the up-and-down direction. The position of the image display unit 100 in the up-and-down direction is determined by one of the plurality of fitting holes 59 into which the retaining screw 56 is inserted. The user may adjust the position of the image display unit 100 in the up-and-down direction so as to comfortably look at image from the image display unit 100.

The pressing surface 52A-1 in the pressing part 52A is larger in a pressing area in the up-and-down direction and the right-and-left direction than the first guiding groove 51-1, and is larger in area than the left side surface 58A-1 in the first holding piece 58A. The pressing part 52A presses the entire left side surface 58A-1, preventing the image display unit 100 from forwardly dropping from the extending part 51A.

Both the front part 20 and the connection parts 30A and 30B are more rigid than the temple bodies 42A and 42B. More precisely, the cross-sectional shapes of both the front part 20 and the connection parts 30A and 30B are larger in ratio of width to height than those of the temple bodies 42A and 42B. When the frame 10 is mounted on the user, the effect of the deformation of the temple bodies 42A and 42B on the position of the front part 20 and the connection parts 30A and 30B is limited. The image display unit 100, retained in one of the connection parts 30A and 30B, is kept in a fixed position relative to the user's eye.

The retaining member 70 is slidably attached to the elongated hole 45A in the front-and-rear direction. Since the cable 110 is inserted in the through-hole 74, the cable 110 does not prevent the user from mounting the ear mounting parts 43A and 43B on the user's ears. When the image display unit 100 is mounted on the connection part 30A, the user may slide the retaining member 70 to sag the cable 110 for easily mounting the image display unit 100.

The retaining member 70 is removably mounted on the temple body 42A by inserting and removing the platelike portion 73 through the aperture portion 46A. When the image display unit 100 is removed from the connection part 30A, the user may handle the image display unit 100 and the frame 10 individually, not integrally, by removing the retaining member 70 from the temple body 42A through the aperture portion 46A. Since the user may handle the image display unit 100 and the frame 10 individually, operations for the image display unit 100, such as storage and maintenance, could become easy.

The sliding surface 73-1 in the platelike portion 73 is curved along the front-and-rear direction so as to be a convex shape toward the sliding surface 47A-1 in the sliding guiding groove 47A. The curvature radius R1 of the sliding surface 73-1 is smaller than the curvature radius R2 of the sliding surface 47A-1. Owing to this relationship between the curvature radius R1 and the curvature radius R2, the sliding surface 73-1 contacts with the sliding surface 47A-1 at one point. This allows the retaining member 70 to slide smoothly.

The cable retaining groove 44A is formed on the left side surface of the ear mounting part 43A at a rear edge portion of the ear mounting part 43A. When the frame 10 is mounted on the user, the cable 110 is retained in the cable retaining groove 44A. The cable 110 does not prevent the user from mounting the frame 10.

The ear mounting part 43A is connected with the temple body 42A in an area lower than the elongated hole 45A. The cable 110 does not interfere with the upper surface 43A-1 of the ear mounting part 43A. The user easily mounts the frame 10 on oneself without bothering about the handling of the cable 110.

When the pair of holding pieces 58A and 58B hold the both side surfaces of the extending part 51A, the image display unit 100 is disposed on a position lower than the front part 20 and the connection part 30A. Thus, the image display unit 100 does not interrupt the user's front view, and the user views images from the image display unit 100 by downwardly moving the user's view.

### Second Embodiment

A second embodiment, and its features and advantages, may be understood by referring to Figs. 24-26, like numerals being used for corresponding parts in the various drawings. In the second embodiment, structure of a frame is different from that in the first embodiment. More precisely, a connection part, a temple part, an extending part, a pressing part, and a pair of holding pieces are different from those in the first embodiment. Other structures are substantially the same as those previously described with respect to the first embodiment. In the second embodiment, the same numerals are assigned for the same structures as those in the first embodiment.

In Fig. 24, a temple body 342A in a temple part 340A is rotatably connected with the with a connection part 330A with the mounting screw 41A. The connection part 330A includes a supporting portion 331A that extends in the rearward direction from the position in which the mounting screw 41A is retained. Both the connection part 330A and the supporting portion 331A are made from pure titanium. Similarly to the first embodiment, when cross-sectional shapes of the connection part 330A and the supporting portion 331A are viewed, a length in the up-and-down direction, i.e., a height, is smaller than a length in the right-and-left direction, i.e., a width. The temple part 340A and the temple body 342A are made from beta titanium. In a cross-sectional shape of the temple body 342A in a direction perpendicular to a longer direction thereof, as well as in the first embodiment, a length in the up-and-down direction, i.e., a height, is larger than a length in the right-and-left direction, i.e., a width.

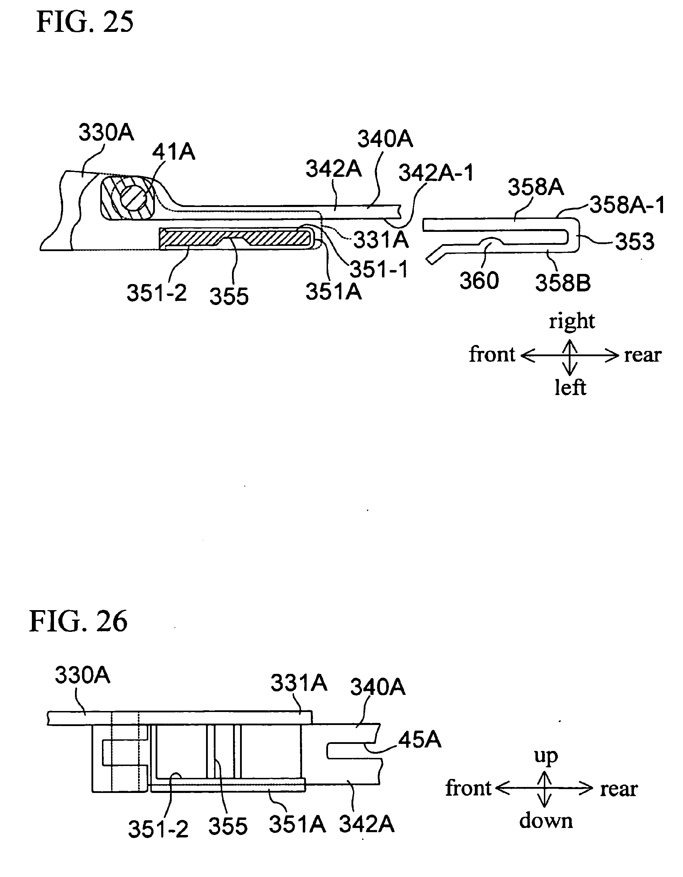

An extending part 351A is fixed to a lower surface of the supporting portion 331A. The extending part 351A extends in the rearward direction from a proximal portion of the position in which the mounting screw 41A is retained. The extending part 351A is made from pure titanium. As shown in Figs. 25 and 26, the extending part 351A has a first guiding groove 351-1 formed therein, a second guiding groove 351-2 formed therein, and an engaging hollow 355. The first guiding groove 351-1 is formed on a right side surface of the extending part 351A, and the second guiding groove 351-2 is formed on a left side surface of the extending part 351A. The first guiding groove 351-1 and the second guiding grooves 351-2 are formed so as to open on a rear edge portion of the extending part 351A. The engaging hollow 355 is formed on a central portion of the second guiding groove 351-2.

A mounting member 353 is retained in the image display unit 100 with the retaining screw 56. As shown in Fig. 25, the mounting member 353 has a first holding piece 358A and a second holding piece 358B. The holding pieces 358A and 358B are integrally formed with the mounting body 57. The second holding piece 358B is elastically deformable, such that the second holding piece 358B selectively approaches and is separated from the first holding piece 358A. The second holding piece 358B includes an engaging bump 360 protruding from a central portion of the second holding piece 358B to the first holding piece 358A.

The free end of the second holding piece 358B is curved so as to be separated from the first holding piece 358A. When the image display unit 100 is mounted on the connection part 330A, the first holding piece 358A and the second holding piece 358B fit the opened rear edge portion of the extending part 351A and are guided by the first guiding groove 351-1 and the second guiding groove 351-2. The engaging bump 360 engages with the engaging hollow 355.

In Fig. 25, when the temple part 340A is mounted on the user's ear, the temple part 340A rotates clockwise with the holding pieces 358A and 358B engaging with the guiding grooves 351-1 and 351-2. The rotation of the temple part 340A causes a left side surface 342A-1 of the temple body 342A to press a right side surface 358A-1 of the holding piece 358A into the extending part 351A. Similarly, the left side surface 342A-1 of the temple body 342A also carries out a pressing operation similarly to the pressing operation of the pressing surface 52A-1 as described in the first embodiment, thereby retaining the image display unit 100 in the connection part 330A.

### < Modifications of the Embodiments>

Although the embodiments have been described in detail herein, the scope of this invention is not limited thereto. It will be appreciated by those of ordinary skill in the relevant art that various modifications may be made without departing from the scope of the invention. We explain several examples of the modifications here. Accordingly, the embodiments disclosed herein are exemplary, and are not limiting the scope of the invention. It is to be understood that the scope of the invention is to be determined by the claims which follow.

### I.

In the embodiments described above, the image display unit 100 is retained in the one of the left side and the right side of the frame 10. The two image display units 100 may be retained in the frame 10. Namely, one image display unit 100 may be retained in the left side of the frame 10, and the other image display unit 100 may be retained in the right side of the frame 10.

### II.

In the embodiments described above, the both holding pieces 58A and 58B fit the extending part 51A from the forward direction, and the both holding pieces 358A and 358B fit the extending part 351A from the rearward direction. Both holding pieces may fit a extending part from the right-and-left direction. In this case, when the both holding pieces fit the extending part from the right-and-left direction, a temple part needs to rotate substantially for separating a pressing part or a temple body from the extending part. Nevertheless, an image display unit is retained in a connection part, due in part to the rotation of the temple part, as well as the embodiments above. Alternatively, both holding pieces may fit an extending part from the downward direction. In this case, an engaging bump and an engaging hollow should be formed on the direction orthogonal to the up-and-down direction so as to prevent both holding pieces from dropping downward from the extending part.

### III.

In the embodiments described above, the extending parts 51A and 351A are fixed to a lower surface of the connection parts 30A and 330A. The extending parts may be fixed to an upper surface of the connection parts. In this case, when holding pieces of a mounting member fit the extending part, the upper surface of the connection parts prevent the mounting member from moving downward, thereby the position of the image display unit in the up-and-down direction being retained.

### IV.

In the embodiments described above, the front part 20 and the connection parts 30A and 330A are different from the temple bodies 42A and 342A and the pressing part 52A in constituent materials and cross-sectional shapes. Based on theses differences, the former are more rigid than the latter. However, either constituent materials or cross-sectional shapes may be different between the former and the latter.

## Claims

1. A head mounted display device comprising:
a frame (10) including,
a front part (20) mountable on a user's nose and in front of the user's eye extending in a right-and-left direction between a right side edge and a left side edge of the front part,
a connection part (30A, 30B) fixed to one edge portion of at least the right side edge and the left side edge and extending in a rearward direction from the one edge portion, and
a temple part (40A, 40B) mountable on the user's ear and connected with the connection part (30A, 30B) rotatably around a rotation axis extending along an up-and-down direction;
an image display unit (100) including an optical system and configured to generate an image to be displayed for the user; and
a retaining mechanism (50) configured to retain the image display unit (100) detachably in the connection part (30A, 30B); **characterized in that**:
the retaining mechanism (50) includes:
a first engaging part (51A, 51B) fixed to the connection part (30A, 30B);
a second engaging part (53) disposed on the image display unit (100) and engageable with the first engaging part (51A, 51B); and
a pressing part (52A, 52B) disposed on the temple part (40A, 40B) to press the second engaging part (53) into the first engaging part (51A) when the temple part (40A, 40B) is mounted on the user's ear with the second engaging part (53) engaging with the first engaging part (51A).

2. The head mounted display device according to claim 1 wherein:
the temple part (40A, 40B) has a connection portion (47A, 47B) connected with a rear edge portion of the connection part (30A, 30B) rotatably around the rotation axis, the pressing part (52A, 52B) extending in a forward direction from the connection portion (47A, 47B); and
the retaining mechanism (50) is configured to retain the image display unit (100) detachably between the connection part (30A, 30B) and the pressing part (52A, 52B) when the temple part (40A, 40B) is mounted on the user's ear.

3. The head mounted display device according to claim 1,
wherein the pressing part (52A, 52B) includes a pressing surface larger in area than an engaging area in which the first engaging part (51A, 51B) engages with the second engaging part (53).

4. The head mounted display device according to claim 3,
wherein the first engaging part (51A, 51B) includes an extending part fixed to the connection part (30A, 30B) and having two side surfaces forwardly extending from a rear edge portion of the connection part (30A, 30B),
wherein the second engaging part (53) includes a pair of holding pieces configured to hold the two side surfaces of the extending part with contacting with the two side surfaces of the extending part,
wherein the temple part (40A, 40B) has a connection portion rotatably connected with the rear edge portion of the connection part around the rotation axis,
wherein the pressing part (52A, 52B) extends in the forward direction from the connection portion and presses the one holding piece of the pair of holding pieces into a side surface of the extending part, and
wherein the pressing surface is further larger in area than an opposite surface of the one holding piece which opposes to the pressing part (52A, 52B) when the pair of holding pieces hold the two side surfaces of the extending part.

5. The head mounted display device according to claim 1 or 3,
wherein the first engaging part (51A, 51B) includes:
an extending part fixed to the connection part and having two side surfaces forwardly extending from a rear edge portion of the connection part; and
a guiding groove extending in a front-and-rear direction along at least one of the two side surfaces of the extending part,
wherein the second engaging part (53) includes a pair of holding pieces for holding the two side surfaces of the extending part with contacting with the two side surfaces of the extending part,
wherein at least one holding piece of the pair of holding pieces fits the guiding groove,
wherein the temple part (40A, 40B) has a connection portion rotatably connected with the rear edge portion of the connection part around the rotation axis, and
wherein the pressing part extends in the forward direction from the connection portion and presses the one holding piece into the guiding groove.

6. The head mounted display device according to claim 4 or 5,
wherein the extending part projects from a lower surface of the connection part (30A, 30B),
wherein the pair of holding pieces projects from an upper surface of the image display unit (100), and
wherein the image display unit (100) is disposed in an area lower than both the front part (20) and the connection part (30A, 30B) when the pair of holding pieces hold the two side surfaces of the extending part.

7. The head mounted display device according to claim 4, 5, or 6,
wherein an engaging bump (60) and an engaging hollow (55) are engageable with each other and formed between the other holding piece of the pair of holding pieces and a certain surface of the extending part with which the other holding piece is engageable,
wherein the engaging bump (60) may be formed on the other holding piece,
wherein the engaging hollow (55) may be formed on the certain surface of the extending part,
wherein the other holding piece is elastic, and
wherein the certain surface of the extending part may be one of the two side surfaces of the extending part.

8. The head mounted display device according to any one of claims 5 to 7,
wherein the guiding groove is formed on the two side surfaces of the extending part and has an opening portion on a front edge portion of the extending part, and
wherein the pair of holding pieces fit the opening portion and are guided by the guiding groove.

9. The head mounted display device according to any one of claims 1 to 8,
wherein the second engaging part (53) is removable from the image display unit (100),
wherein a plurality of fitting holes (59) and a boss (56) may be formed between the second engaging part (53) and the image display unit (100),
wherein the plurality of fitting holes (59) may be disposed in different positions and the boss (56) fits any one of the plurality of fitting holes (59),
wherein the plurality of fitting holes (59) may be formed on the second engaging part (53),
wherein the plurality of fitting holes (59) may be disposed in different positions in the up-and-down direction when the second engaging part (53) engages with the first engaging part (51A, 51B), and
wherein the boss (56) may be formed on the image display unit (100).

10. The head mounted display device according to any preceding claim, wherein one or both of
both the front part (20) and the connection part (30A, 30B) are more rigid than the temple part (40A, 40B) such that deformation of the front part (20) and the connection part (30A, 30B) caused by a bending moment around the rotation axis are reduced, and cross-sectional shapes of both the front part (20) and the connection part (30A, 30B) are larger in ratio of width to height parallel to the rotation axis than that of the temple part (40A, 40B).

11. The head mounted display device according to any preceding claim,
wherein the image display unit (100) is configured to receive signals from an external apparatus via a cable to display an image,
wherein the temple part (40A, 40B) further has a retaining member (70) configured to retain the cable,
wherein the retaining member (70) is attached to the temple part (40A, 40B) such that the retaining member (70) slides in the front-and-rear direction along the temple part (40A, 40B), and
wherein the temple part (40A, 40B) may have an elongated hole (45A) elongating in the front-and-rear direction, and
wherein the retaining member (70) may have a sliding portion formed to fit the elongated hole (45A), a cable retaining portion formed with the sliding portion on one side surface of the sliding portion and configured to retain the cable, and a platelike portion formed with the sliding portion on the other side surface of the sliding portion and wider than width of the elongated hole (45A).

12. The head mounted display device according to claim 11,
wherein the temple part (40A, 40B) has an aperture portion formed on a rear edge portion of the elongated hole (45A) and large enough to allow the platelike portion to pass through the aperture portion, and
wherein the retaining member (70) is removably mounted on the temple part (40A, 40B) by inserting and removing the platelike portion through the aperture portion.

13. The head mounted display device according to claim 11 or 12,
wherein the platelike portion has a curved sliding surface able to contact with a side surface of the temple part (40A, 40B),
wherein curvature of the curved sliding surface is along a direction of the length of the elongated hole (45A) such that the curved sliding surface is a convex shape toward the side surface of the temple part (40A, 40B),
wherein the side surface of the temple part (40A, 40B) curves by a bending moment around the rotation axis when the temple part (40A, 40B) is mounted on the user's ear, and
wherein a curvature radius of the curved sliding surface is smaller than that of the side surface of the curved temple part.

14. The head mounted display device according to claim 13,
wherein the temple part (40A, 40B) has:
a temple body (42A, 42B) extending in the rear direction from a connection portion of the temple part (40A, 40B) connected rotatably with the rear edge portion of the connection part around the rotation axis;
an ear mounting part (43A, 43B) mountable on the user's ear and disposed on a rear edge of the temple body, and
a cable retaining groove (44A, 44B) formed on the ear mounting part to retain the cable; and wherein
the elongated hole (45A) may be formed on the temple body, and the ear mounting part may extend in the rear direction and be connected with the temple body in an area lower than the elongated hole.

## Patentansprüche

1. Am Kopf angebrachte Anzeigevorrichtung mit:
einem Rahmen (10) einschließlich
eines vorderen Teils (20), der an einer Nase eines Benutzers und vor dem Auge des Benutzers anbringbar ist und sich in einer Rechts/Links-Richtung zwischen einer rechten Seitenkante und einer linken Seitenkante des vorderen Teils erstreckt,
eines Verbindungsteils (30A, 30B), der an einem Kantenabschnitt zumindest von der rechten Seitenkante oder der linken Seitenkante befestigt ist und sich in einer nach hinten gerichteten Richtung von dem einen Kantenabschnitt erstreckt, und
eines Schläfenteils (40A, 40B), der an einem Ohr des Benutzers anbringbar und mit dem Verbindungsteil (30A, 30B) um eine Drehachse drehbar verbunden ist, die sich entlang einer Oben/Unten-Richtung erstreckt;
einer Bildanzeigeeinheit (100) einschließlich eines optischen Systems, die dazu konfiguriert ist, ein für den Benutzer anzuzeigendes Bild zu erzeugen; und
einem Rückhaltemechanismus (50), der dazu konfiguriert ist, die Bildanzeigeeinheit (100) abnehmbar in dem Verbindungsteil (30A, 30B) zurückzuhalten; **dadurch gekennzeichnet, dass**:
der Rückhaltemechanismus (50) Folgendes aufweist:
einen ersten Eingriffsteil (51A, 51B), der an dem Verbindungsteil (30A, 30B) befestigt ist;
einen zweiten Eingriffsteil (53), der an der Bildanzeigeeinheit (100) angeordnet und mit dem ersten Eingriffsteil (51A, 51B) in Eingriff gelangen kann; und
einen Druckteil (52A, 52B), der an dem Schläfenteil (40A; 40B) angeordnet ist, um den zweiten Eingriffsteil (53) in den ersten Eingriffsteil (51A) zu drücken, wenn der Schläfenteil (40A, 40B) an das Ohr des Benutzers angebracht wird, wobei der zweite Eingriffsteil (53) mit dem ersten Eingriffsteil (51A) in Eingriff gelangt.

2. Am Kopf angebrachte Anzeigevorrichtung gemäß Anspruch 1, wobei:
der Schläfenteil (40A, 40B) einen Verbindungsabschnitt (47A, 47B) hat, der mit einem hinteren Kantenabschnitt des Verbindungsteils (30A, 30B) um die Drehachse drehbar verbunden ist, wobei sich der Druckteil (52A, 52B) in einer nach vorn gerichteten Richtung von dem Verbindungsabschnitt (47A, 47B) erstreckt; und
der Rückhaltemechanismus (50) dazu konfiguriert ist, die Bildanzeigeeinheit (100) zwischen dem Verbindungsteil (30A, 30B) und dem Druckteil (52A, 52B) abnehmbar zurückzuhalten, wenn der Schläfenteil (40A, 40B) an dem Ohr des Benutzers angebracht ist.

3. Am Kopf angebrachte Anzeigevorrichtung gemäß Anspruch 1,
wobei der Druckteil (52A, 52B) eine Druckfläche aufweist, die einen größeren Flächeninhalt als eine Eingriffsfläche hat, an der der erste Eingriffsteil (51A, 51B) mit dem zweiten Eingriffsteil (53) im Eingriff ist.

4. Am Kopf angebrachte Anzeigevorrichtung gemäß Anspruch 3,
wobei der erste Eingriffsteil (51A, 51B) einen Erweiterungsteil aufweist, der an dem Verbindungsteil (30A, 30B) befestigt ist und zwei Seitenflächen hat, die sich von einem hinteren Kantenabschnitt des Verbindungsteils (30A, 30B) nach vorn erstrecken,
wobei der zweite Eingriffsteil (53) ein Paar Haltestücke aufweist, die dazu konfiguriert sind, die beiden Seitenflächen des Erweiterungsteils zu halten, indem sie mit den beiden Seitenflächen des Erweiterungsteils in Kontakt sind,
wobei der Schläfenteil (40A, 40B) einen Verbindungsabschnitt hat, der mit dem hinteren Kantenabschnitt des Verbindungsteils um die Drehachse drehbar verbunden ist,
wobei der Druckteil (52A, 52B) sich in der nach vorn gerichteten Richtung von dem Verbindungsabschnitt erstreckt und das eine Haltestück des Paars Haltestücke in eine Seitenfläche des Erweiterungsteils drückt, und
wobei die Druckfläche einen größeren Flächeninhalt hat als eine gegenüberliegende Fläche des einen Haltestücks, die dem Druckteil (52A, 52B) gegenüberliegt, wenn das Paar Haltestücke die beiden Seitenflächen des Erweiterungsteils hält.

5. Am Kopf angebrachte Anzeigevorrichtung gemäß Anspruch 1 oder 3,
wobei der erste Eingriffsteil (51A, 51B) Folgendes aufweist:
einen Erweiterungsteil, der an dem Verbindungsteil befestigt ist und zwei Seitenflächen hat, die sich von einem hinteren Kantenabschnitt des Verbindungsteils nach vorn erstrecken; und
eine Führungsnut, die sich in einer Vorn/Hinten-Richtung zumindest entlang von einer der beiden Seitenflächen des Erweiterungsteils erstreckt,
wobei der zweite Eingriffsteil (53) ein Paar Haltestücke hat, um die beiden Seitenflächen des Erweiterungsteils zu halten, indem sie mit den beiden Seitenflächen des Erweiterungsteils in Kontakt sind,
wobei zumindest ein Haltestück des Paars Haltestücke in der Führungsnut eingepasst ist,
wobei der Schläfenteil (40A, 40B) einen Verbindungsabschnitt hat, der mit dem hinteren Kantenabschnitt des Verbindungsteils um die Drehachse drehbar verbunden ist, und
wobei sich der Druckteil in der nach vorn gerichteten Richtung von dem Verbindungsabschnitt erstreckt und das eine Haltestück in die Führungsnut drückt.

6. Am Kopf angebrachte Anzeigevorrichtung gemäß Anspruch 4 oder 5,
wobei der Erweiterungsteil von einer unteren Fläche des Verbindungsteils (30A, 30B) vorsteht,
wobei das Paar Haltestücke von einer oberen Fläche der Bildanzeigeeinheit (100) vorsteht, und
wobei die Bildanzeigeeinheit (100) in einem Bereich angeordnet ist, der jeweils kleiner ist als der vordere Teil (20) und der Verbindungsteil (30A, 30B), wenn das Paar Haltestücke die beiden Seitenflächen des Erweiterungsteils hält.

7. Am Kopf angebrachte Anzeigevorrichtung gemäß Anspruch 4, 5 oder 6,
wobei ein Eingriffshöcker (60) und eine Eingriffsaushöhlung (55) miteinander in Eingriff gelangen können und zwischen dem anderen Haltestück des Paars Haltestücke und einer besonderen Fläche des Erweiterungsteils ausgebildet sind, mit dem das andere Haltestück in Eingriff gelangen kann,
wobei der Eingriffshöcker (60) an dem anderen Haltestück ausgebildet sein kann,
wobei die Eingriffsaushöhlung (55) an der besonderen Fläche des Erweiterungsteils ausgebildet sein kann,
wobei das andere Haltestück elastisch ist, und wobei die besondere Fläche des Erweiterungsteils eine der beiden Seitenflächen des Erweiterungsteils sein kann.

8. Am Kopf angebrachte Anzeigevorrichtung gemäß einem der Ansprüche 5 bis 7,
wobei die Führungsnut an den beiden Seitenflächen des Erweiterungsteils ausgebildet ist und einen Öffnungsabschnitt an einem vorderen Kantenabschnitt des Erweiterungsteils hat, und
wobei das Paar Haltestücke in den Öffnungsabschnitt eingepasst ist und durch die Führungsnut geführt wird.

9. Am Kopf angebrachte Anzeigevorrichtung gemäß einem der Ansprüche 1 bis 8,
wobei der zweite Eingriffsteil (53) von der Bildanzeigeeinheit (100) abnehmbar ist,
wobei viele Befestigungslöcher (59) und eine Nabe (56) zwischen dem zweiten Eingriffsteil (53) und der Bildanzeigeeinheit (100) ausgebildet sein können,
wobei die vielen Befestigungslöcher (59) an unterschiedlichen Positionen angeordnet sein können und die Nabe (56) in eines der vielen Befestigungslöcher (59) eingepasst ist,
wobei die vielen Befestigungslöcher (59) an dem zweiten Eingriffsteil (53) ausgebildet sein können,
wobei die vielen Befestigungslöcher (59) an unterschiedlichen Positionen in der Oben/Unten-Richtung angeordnet sein können, wenn der zweite Eingriffsteil (53) mit dem ersten Eingriffsteil (51A, 51B) in Eingriff ist, und
wobei die Nabe (56) an der Bildanzeigeeinheit (100) ausgebildet sein kann.

10. Am Kopf angebrachte Anzeigevorrichtung gemäß einem der vorherigen Ansprüche,
wobei eines oder beides von Folgendem zutrifft:
sowohl der vordere Teil (20) als auch der Verbindungsteil (30A, 30B) steifer sind als der Schläfenteil (40A, 40B), so dass eine Verformung des vorderen Teils (20) und des Verbindungsteils (30A, 30B) reduziert wird, die durch ein Biegemoment um die Drehachse verursacht wird, und wobei Querschnittsformen sowohl von dem vorderen Teil (20) als auch von dem Verbindungsteil (30A, 30B) ein größeres Verhältnis der Breite zur Höhe parallel zu der Drehachse als jenes des Schläfenteils (40A, 40B) haben.

11. Am Kopf angebrachte Anzeigevorrichtung gemäß einem der vorherigen Ansprüche,
wobei die Bildanzeigeeinheit (100) dazu konfiguriert ist, Signale von einem externen Gerät über ein Kabel zum Anzeigen eines Bilds aufzunehmen,
wobei der Schläfenteil (40A, 40B) des Weiteren ein Rückhalteelement (70) hat, das dazu konfiguriert ist, das Kabel zurückzuhalten,
wobei das Rückhalteelement (70) an dem Schläfenteil (40A, 40B) derart angebracht ist, dass der Rückhalteteil (70) in der Vorn/Hinten-Richtung entlang des Schläfenteils (40A, 40B) gleitet, und
wobei der Schläfenteil (40A, 40B) ein Langloch (45A) haben kann, das in der Vorn/Hinten-Richtung länglich ausgebildet ist, und
wobei das Rückhalteelement (70) einen Gleitabschnitt, der so ausgebildet ist, dass er in das Langloch (45A) passt, einen Kabelzurückhalteabschnitt, der mit dem Gleitabschnitt an einer Seitenfläche des Gleitabschnitts ausgebildet ist und dazu konfiguriert ist, das Kabel zurückzuhalten, und einen plattenartigen Abschnitt haben kann, der mit dem Gleitabschnitt an der anderen Seitenfläche des Gleitabschnitts ausgebildet ist und eine größere Breite als das Langloch (45A) hat.

12. Am Kopf angebrachte Anzeigevorrichtung gemäß Anspruch 11,
wobei der Schläfenteil (40A, 40B) einen Öffnungsabschnitt hat, der an einem hinteren Kantenabschnitt des Langlochs (45A) ausgebildet ist und groß genug ist, das Hindurchtreten des plattenartigen Abschnitts durch den Öffnungsabschnitt zu ermöglichen, und
wobei das Rückhalteelement (70) an dem Schläfenteil (40A, 40B) abnehmbar angebracht wird, indem der plattenartige Abschnitt durch den Öffnungsabschnitt eingefügt und entfernt wird.

13. Am Kopf angebrachte Anzeigevorrichtung gemäß Anspruch 11 oder 12,
wobei der plattenartige Abschnitt eine gekrümmte Gleitfläche hat, die mit einer Seitenfläche des Schläfenteils (40A, 40B) in Kontakt gelangen kann,
wobei die Krümmung der gekrümmten Gleitfläche entlang einer Richtung der Länge des Langlochs (45A) derart ist, dass die gekrümmte Gleitfläche eine konvexe Form zu der Seitenfläche des Schläfenteils (40A, 40B) hat,
wobei die Seitenfläche des Schläfenteils (40A, 40B) durch ein Biegemoment um die Drehachse gekrümmt wird, wenn der Schläfenteil (40A, 40B) an dem Ohr des Benutzers angebracht ist, und
wobei ein Krümmungsradius der gekrümmten Gleitfläche kleiner ist als jener der Seitenfläche des gekrümmten Schläfenteils.

14. Am Kopf angebrachte Anzeigevorrichtung gemäß Anspruch 13, wobei der Schläfenteil (40A, 40B) Folgendes aufweist:
einen Schläfenkörper (42A, 42B), der sich in der nach hinten gerichteten Richtung von einem Verbindungsabschnitt des Schläfenteils (40A, 40B) erstreckt, der mit dem hinteren Kantenabschnitt des Verbindungsteils um die Drehachse drehbar verbunden ist;
einen Ohrbefestigungsteil (43A, 43B), der an dem Ohr des Benutzers anbringbar ist und an einer hinteren Kante des Schläfenkörpers angeordnet ist, und
eine Kabelrückhaltenut (44A, 44B), die an dem Ohrbefestigungsteil ausgebildet ist, um das Kabel zurückzuhalten; und wobei
das Langloch (45A) an dem Schläfenkörper ausgebildet sein kann, und sich der Ohrbefestigungsteil in der nach hinten gerichteten Richtung erstrecken kann und mit dem Schläfenkörper in einem Bereich verbunden ist, der kleiner ist als das Langloch.

## Revendications

1. Dispositif d'affichage monté sur la tête comprenant:
un châssis (10) comportant,
une partie avant (20) montée sur le nez d'un utilisateur et en face de l'oeil de l'utilisateur s'étendant dans une direction droite et gauche entre un bord latéral droit et un bord latéral gauche de la partie avant,
une partie de raccordement (30A, 30B) fixée à une partie de bord d'au moins le bord latéral droit et le bord latéral gauche et s'étendant dans une direction vers l'arrière à partir de la partie de bord, et
une partie branche (40A, 40B) pouvant être montée sur l'oreille de l'utilisateur et reliée avec la partie de raccordement (30A, 30B) de manière rotative autour d'un axe de rotation s'étendant le long d'une direction ascendante et descendante ;
une unité (100) d'affichage d'images comportant un système optique et configurée pour générer une image devant être affichée pour l'utilisateur ; et
un mécanisme de retenue (50) configuré pour retenir l'unité (100) d'affichage d'images de manière amovible dans la partie de raccordement (30A, 30B) ; **caractérisé en ce que** :
le mécanisme de retenue (50) comporte :
une première partie d'engagement (51A, 51B) fixée à la partie de raccordement (30A, 30B) ;
une deuxième partie d'engagement (53) disposée sur l'unité (100) d'affichage d'images et pouvant être engagée avec la première partie d'engagement (51A, 51B) ; et
une partie de pressage (52A, 52B) disposée sur la partie branche (40A, 40B) pour presser la deuxième partie d'engagement (53) dans la première partie d'engagement (51A) lorsque la partie branche (40A, 40B) est montée sur l'oreille de l'utilisateur avec la deuxième partie d'engagement (53) s'engageant avec la première partie d'engagement (51A).

2. Dispositif d'affichage monté sur la tête selon la revendication 1, dans lequel :
la partie branche (40A, 40B) possède une partie de raccordement (47A, 47B) reliée avec une partie de bord arrière de la partie de raccordement (30A, 30B) de manière rotative autour de l'axe de rotation, la partie de pressage (52A, 52B) s'étendant dans une direction vers l'avant à partir de la partie de raccordement (47A, 47B) ; et
le mécanisme de retenue (50) est configuré pour retenir l'unité (100) d'affichage d'images de manière amovible entre la partie de raccordement (30A, 30B) et la partie de pressage (52A, 52B) lorsque la partie branche (40A, 40B) est montée sur l'oreille de l'utilisateur.

3. Dispositif d'affichage monté sur la tête selon la revendication 1,
dans lequel la partie de pressage (52A, 52B) comporte une surface de pressage dont la superficie est plus importante qu'une zone d'engagement dans laquelle la première partie d'engagement (51A, 5IB) s'engage avec la deuxième partie d'engagement (53).

4. Dispositif d'affichage monté sur la tête selon la revendication 3,
dans lequel la première partie d'engagement (51A, 51B) comporte une partie de prolongement fixée à la partie de raccordement (30A, 30B) et ayant deux surfaces latérales s'étendant vers l'avant depuis une partie de bord arrière de la partie de raccordement (30A, 30B),
dans lequel la deuxième partie d'engagement (53) comporte une paire de pièces de maintien configurées pour maintenir les deux surfaces latérales de la partie de prolongement avec mise en contact avec les deux surfaces latérales de la partie de prolongement,
dans lequel la partie branche (40A, 40B) possède une partie de raccordement reliée en rotation avec la partie de bord arrière de la partie de raccordement autour de l'axe de rotation,
dans lequel la partie de pressage (52A, 52B) s'étend dans la direction vers l'avant à partir de la partie de raccordement et presse la pièce de maintien de la paire de pièces de maintien dans une surface latérale de la partie de prolongement, et
dans lequel la superficie de la surface de pressage est en outre plus importante que celle de la surface opposée de la pièce de maintien qui s'oppose à la partie de pressage (52A, 52B) lorsque la paire de pièces de maintien maintiennent les deux surfaces latérales de la partie de prolongement.

5. Dispositif d'affichage monté sur la tête selon la revendication 1 ou 3,
dans lequel la première partie d'engagement (51A, 51B) comporte :
une partie de prolongement fixée sur la partie de raccordement et ayant deux surfaces latérales s'étendant vers l'avant depuis une partie de bord arrière de la partie de raccordement ; et
une rainure de guidage s'étendant dans une direction avant et arrière le long d'au moins l'une des deux surfaces latérales de la partie de prolongement,
dans lequel la deuxième partie d'engagement (53) comporte une paire de pièces de maintien permettant de maintenir les deux surfaces latérales de la partie de prolongement avec mise en contact avec les deux surfaces latérales de la partie de prolongement,
dans lequel au moins une pièce de maintien de la paire de pièces de maintien s'ajustent à la rainure de guidage,
dans lequel la partie branche (40A, 40B) possède une partie de raccordement reliée en rotation avec la partie de bord arrière de la partie de raccordement autour de l'axe de rotation, et
dans lequel la partie de pressage s'étend dans la direction vers l'avant depuis la partie de raccordement et presse la pièce de maintien dans la rainure de guidage.

6. Dispositif d'affichage monté sur la tête selon la revendication 4 ou 5,
dans lequel la partie de prolongement se projette à partir d'une surface inférieure de la partie de raccordement (30A, 30B),
dans lequel la paire de pièces de maintien se projette à partir d'une surface supérieure de l'unité (100) d'affichage d'images, et
dans lequel l'unité (100) d'affichage d'images est disposée dans une zone plus basse que la partie avant (20) et la partie de raccordement (30A, 30B) lorsque la paire de pièces de maintien maintiennent les deux surfaces latérales de la partie de prolongement.

7. Dispositif d'affichage monté sur la tête selon l'une des revendications 4, 5, ou 6,
dans lequel un bossage d'engagement (60) et un creux d'engagement (55) peuvent être engagés l'un avec l'autre et formés entre l'autre pièce de maintien de la paire de pièces de maintien et une certaine surface de la partie de prolongement avec laquelle l'autre pièce de maintien peut être engagée,
dans lequel le bossage d'engagement (60) peut être formé sur l'autre pièce de maintien,
dans lequel le creux d'engagement (55) peut être formé sur la certaine surface de la partie de prolongement,
dans lequel l'autre pièce de maintien est élastique, et
dans lequel la certaine surface de la partie de prolongement peut être l'une des deux surfaces latérales de la partie de prolongement.

8. Dispositif d'affichage monté sur la tête selon l'une quelconque des revendications 5 à 7,
dans lequel la rainure de guidage est formée sur les deux surfaces latérales de la partie de prolongement et possède une partie d'ouverture sur une partie de bord avant de la partie de prolongement, et
dans lequel la paire de pièces de maintien s'ajustent à la partie d'ouverture et sont guidées par la rainure de guidage.

9. Dispositif d'affichage monté sur la tête selon l'une quelconque des revendications 1 à 8,
dans lequel la deuxième partie d'engagement (53) est amovible à partir de l'unité (100) d'affichage d'images,
dans lequel une pluralité de trous de fixation (59) et un bossage (56) peuvent être formés entre la deuxième partie d'engagement (53) et l'unité (100) d'affichage d'images,
dans lequel la pluralité de trous de fixation (59) peuvent être disposés dans des positions différentes et le bossage (56) s'ajuste à l'un quelconque de la pluralité de trous de fixation (59),
dans lequel la pluralité de trous de fixation (59) peuvent être formés sur la deuxième partie d'engagement (53),
dans lequel la pluralité de trous de fixation (59) peuvent être disposés dans des positions différentes dans la direction ascendante et descendante lorsque la deuxième partie d'engagement (53) s'engage avec la première partie d'engagement (51A, 51B), et
dans lequel le bossage (56) peut être formé sur l'unité (100) d'affichage d'images.

10. Dispositif d'affichage monté sur la tête selon l'une des revendications précédentes, dans lequel l'une ou/et l'autre :
de la partie avant (20) et de la partie de raccordement (30A, 30B) sont plus rigides que la partie branche (40A, 40B) de sorte que la déformation de la partie avant (20) et de la partie de raccordement (30A, 30B) entraînée par un moment de flexion autour de l'axe de rotation soit réduite, et les rapports largeur-hauteur parallèlement à l'axe de rotation des formes en section transversale de la partie avant (20) et de la partie de raccordement (30A, 30B) sont plus importants que ceux de la partie branche (40A, 40B).

11. Dispositif d'affichage monté sur la tête selon l'une des revendications précédentes,
dans lequel l'unité (100) d'affichage d'images est configurée pour recevoir des signaux provenant d'un appareil externe par l'intermédiaire d'un câble pour afficher une image,
dans lequel la partie branche (40A, 40B) possède en outre un élément de retenue (70) configuré pour retenir le câble,
dans lequel l'élément de retenue (70) est fixé à la partie branche (40A, 40B) de sorte que l'élément de retenue (70) coulisse dans la direction avant-arrière le long de la partie branche (40A, 40B), et
dans lequel la partie branche (40A, 40B) peut avoir un trou allongé (45A) s'allongeant dans la direction avant-arrière, et
dans lequel l'élément de retenue (70) peut avoir une partie coulissante formée de manière à s'ajuster au trou allongé (45A), une partie de retenue de câble formée avec la partie coulissante sur une surface latérale de la partie coulissante et configurée pour retenir le câble, et une partie en forme de plaque formée avec la partie coulissante sur l'autre surface latérale de la partie coulissante et plus large que la largeur du trou allongé (45A).

12. Dispositif d'affichage monté sur la tête selon la revendication 11,
dans lequel la partie branche (40A, 40B) possède une partie d'ouverture formée sur une partie de bord arrière du trou allongé (45A) et est suffisamment grande pour permettre à la partie en forme de plaque de passer à travers la partie d'ouverture, et
dans lequel l'élément de retenue (70) est monté de manière amovible sur la partie branche (40A, 40B) par l'insertion et l'enlèvement de la partie en forme de plaque à travers la partie d'ouverture.

13. Dispositif d'affichage monté sur la tête selon la revendication 11 ou 12,
dans lequel la partie en forme de plaque possède une surface de coulissement incurvée capable d'entrer en contact avec une surface latérale de la partie branche (40A, 40B),
dans lequel la courbure de la surface de coulissement incurvée est le long d'une direction de la longueur du trou allongé (45A) de sorte que la surface de coulissement incurvée soit une forme convexe vers la surface latérale de la partie branche (40A, 40B),
dans lequel la surface latérale de la partie branche (40A, 40B) s'incurve par un moment de flexion autour de l'axe de rotation lorsque la partie branche (40A, 40B) est montée sur l'oreille de l'utilisateur, et
dans lequel un rayon de courbure de la surface de coulissement incurvée est plus petit que celui de la surface latérale de la partie branche incurvée.

14. Dispositif d'affichage monté sur la tête selon la revendication 13,
dans lequel la partie branche (40A, 40B) possède :
un corps de branche (42A, 42B) s'étendant dans la direction arrière à partir d'une partie de raccordement de la partie branche (40A, 40B) reliée en rotation avec la partie de bord arrière de la partie de raccordement autour de l'axe de rotation ;
une partie (43A, 43B) de montage d'oreille pouvant être montée sur l'oreille de l'utilisateur et disposée sur un bord arrière du corps de branche, et
une rainure (44A, 44B) de retenue de câble formée sur la partie de montage d'oreille pour retenir le câble ; et dans lequel
le trou allongé (45A) peut être formé sur le corps de branche, et la partie de montage d'oreille peut s'étendre dans la direction arrière et être reliée avec le corps de branche dans une zone plus basse que le trou allongé.
